# EUROPEAN PATENT APPLICATION

(11) **EP 4 508 993 A1**
(43) Date of publication of application: **19.02.2025**
(21) Application number: 23191428.4
(22) Date of filing: 14.08.2023
(51) Int. Cl.: A24D 3/18, A24F 7/00, A23G 4/00

(54) **EDIBLE MOUTHPIECE SYSTEM FOR USE WITH SMOKABLE ITEMS**

(71) Applicant: Aidemar Group, Inc., Vernon, CA 90058 (US)
(72) Inventor: Wahidi, Jawid, Vernon, California 90058 (US)
(74) Representative: Bradley, Josephine Mary

(57) **Abstract**

An edible mouthpiece system for use with a smokable item (*e.g.,* a cigar, a cigarette, a pre-roll cone, an empty cone, a pre-rolled or hand-rolled cigarette, etc.). The edible mouthpiece is entirely comprised of an edible material, such as candy (*e.g.,* hard candy, chewing gum, etc.), or other types of edible materials. During use, the edible mouthpiece is coupled with the mouth end of a smokable item, comes into physical contact with the user's mouth, and provides flavoring thereto to enhance the smoking experience. Smoke from the smokable item also is enhanced with flavor while passing through an inner passageway within the mouthpiece to the user's mouth. The mouthpiece system may include weakened areas that the user may bite to break off one or more sections of the edible mouthpiece to enjoy as one would enjoy candy (*e.g.,* to suck on, chew, swallow, ingest, etc.) during or after the smoking experience.

## Description

### FIELD OF THE INVENTION

The present invention relates to smokable items, including an edible mouthpiece for use with cigars, cigarettes, cones, pre-rolls, blunts, and other smokable items.

### BACKGROUND

Cigars, cigarettes, pre-rolls, blunts, and other types of smokable items are well known and smoked for pleasure throughout the world. In some cases, such smokable items include a mouthpiece on one end to provide support to the smokable item and to provide an area for the user to hold the item in his/her mouth during the smoking experience. Such mouthpieces are typically comprised of paper, cardboard, plastic, or wood and do not add flavoring or other embellishments to the smokable item or to the smoking experience.

In addition, such mouthpieces are not edible and cannot be consumed.

Accordingly, there is a need for an edible mouthpiece for use with smokable items that provides flavoring for the user to directly taste, that infuses the smoke with flavoring, and that may be broken off to be enjoyed as one would enjoy a piece of candy *(e.g.,* that may be sucked on, chewed, swallowed, and ingested during the smoking experience).

### SUMMARY

According to one aspect, one or more embodiments are provided below for an edible mouthpiece system for use with smokable items. The edible mouthpiece system may include a smokable assembly comprising a mouthpiece comprised entirely of edible materials including a flavoring, the mouthpiece including a mouthpiece first end, a mouthpiece second end, a mouthpiece body extending between the mouthpiece first end and the mouthpiece second end, and an inner passageway defined by passageway sidewalls comprised of the edible materials including the flavoring and extending through the mouthpiece body from the mouthpiece first end to the mouthpiece second end; and a combustible member including a member first end, a member second end, and a member body extending between the member first end and the member second end; wherein the mouthpiece second end is physically coupled directly to the member first end, and wherein in use, the combustible item is combusted to create smoke, wherein the smoke, upon a user inhaling from the mouthpiece first end, passes through the inner passageway, contacts the edible materials including the flavoring that comprise the passageway sidewalls, and becomes flavored smoke due to contact with the flavoring.

In another embodiment, the entire mouthpiece is adapted to be ingested by the user.

In another embodiment, the mouthpiece is adapted to be broken at a location between the mouthpiece first end and the mouthpiece second end to form at least two separate broken mouthpiece portions.

In another embodiment, least one of the at least two separate broken mouthpiece portions is adapted to be ingested by the user.

In another embodiment, the mouthpiece includes at least one weakened area between the mouthpiece first end and the mouthpiece second end and wherein the mouthpiece is adapted to be broken at the at least one weakened area to form at least two separate broken mouthpiece portions.

In another embodiment, at least one of the at least two separate broken mouthpiece portions is adapted to be ingested by the user.

In another embodiment, the at least one weakened area includes an area of reduced mouthpiece body width and wherein at least one of the at least two separate broken mouthpiece portions is adapted to be ingested by the user.

In another embodiment, the area of reduced mouthpiece body width includes a circumferential notch in the mouthpiece body.

In another embodiment, the mouthpiece first end and the mouthpiece second end define a mouthpiece longitudinal axis, and the circumferential notch is along a plane that is at an offset angle with respect to the mouthpiece longitudinal axis.

In another embodiment, the mouthpiece first end and the mouthpiece second end define a mouthpiece longitudinal axis, and the circumferential notch is along a plane that is substantially orthogonal with respect to the mouthpiece longitudinal axis.

In another embodiment, the edible materials include at least one of candy, chewing gum, and gummy.

In another embodiment, the combustible member includes at least one of an empty cone, a pre-roll cone, a blunt, a cigarette, and a cigar.

In another embodiment, the edible material is chosen to withstand 3-5 second bursts of 400°C - 900°C smoke without the inner passageway closing and/or becoming obstructed.

In another embodiment, the at least one weakened area includes a total of two circumferential notches in the mouthpiece body.

In another embodiment, the mouthpiece body is formed as a conical frustum.

In another embodiment, the mouthpiece second end is physically coupled directly to the member first end using outer circumferential wrapping material.

The presently disclosed system and method for evaluating growing media is more fully described in the detailed description below.

### BRIEF DESCRIPTION OF THE DRAWINGS

Various other objects, features and attendant advantages of the present invention will become fully appreciated as the same becomes better understood when considered in conjunction with the accompanying drawings, in which like reference characters designate the same or similar parts throughout the several views, and wherein:
**FIG. 1** shows aspects of an edible mouthpiece system according to exemplary embodiments hereof;
**FIG. 2** shows a side sectional view of the edible mouthpiece system of **FIG. 1** according to exemplary embodiments hereof;
**FIGS. 3-4** show end views of the edible mouthpiece system of **FIG. 1** according to exemplary embodiments hereof;
**FIG. 5** shows aspects of an edible mouthpiece system including a smokable item according to exemplary embodiments hereof;
**FIG. 6** shows a side sectional view of an edible mouthpiece system according to exemplary embodiments hereof;
**FIG. 7** shows aspects of an edible mouthpiece system including a smokable item according to exemplary embodiments hereof;
**FIG. 8** shows a side sectional view of an edible mouthpiece system according to exemplary embodiments hereof;
**FIG. 9** shows aspects of an edible mouthpiece system including a smokable item according to exemplary embodiments hereof;
**FIG. 10** shows aspects of an edible mouthpiece system according to exemplary embodiments hereof;
**FIG. 11** shows aspects of an edible mouthpiece system including a smokable item according to exemplary embodiments hereof;
**FIG. 12** shows aspects of an edible mouthpiece system according to exemplary embodiments hereof;
**FIG. 13** shows aspects of an edible mouthpiece system according to exemplary embodiments hereof;
**FIG. 14** shows aspects of an edible mouthpiece system according to exemplary embodiments hereof;
**FIG. 15** shows aspects of an edible mouthpiece system including a smokable item according to exemplary embodiments hereof; and
**FIG. 16** shows aspects of an edible mouthpiece system including a smokable item according to exemplary embodiments hereof.

### DETAILED DESCRIPTION OF THE INVENTION

For the purposes of this specification, unless otherwise stated, the terms below will mean the following.

Cigar generally refers to a smokable comprising a rolled bundle of dried and fermented tobacco leaves. Cigars typically include three distinct components: the filler, the binder leaf which holds the filler together, and a wrapper leaf to form the smokable.

Cigarette generally refers to a smokable comprising a thin cylinder of finely cut tobacco, cannabis, other types of leaves, flowers, herbs, and/or other smokable materials, rolled in a suitable paper for smoking.

Cone generally refers to a conical- or frustum-shaped cigarette (or "joint") wherein the shape flares from a smaller diameter proximal mouth end to a larger diameter distal end. Cones may typically comprise paper, hemp, palm leaves, rice, cotton cellulose, glycerin, and/or other suitable materials. The cone may or may not include a mouthpiece at the mouth end for the user to hold in his/her mouth while smoking.

Pre-roll generally refers to a cigarette or cone that has been formed prior to its sale, includes a smokable material within the cigarette or cone, and is therefore consumer-ready and ready to smoke (i.e., a consumer is not required to fill or otherwise form the smokable).

Empty cone refers to an empty cone into which a consumer may place smokable materials *(e.g.,* tobacco, cannabis, etc.) to form a smokable cone.

Mouthpiece refers to a tip coupled with the mouth end of a cigar, cone, cigarette, or other smokable item that acts to support the proximal end of the smokable *(e.g.,* the end that is pressed against one's lips for smoking) and to provide one or more surfaces for the user to hold the mouthpiece with his/her mouth *(e.g.,* lips, teeth, etc.) while smoking.

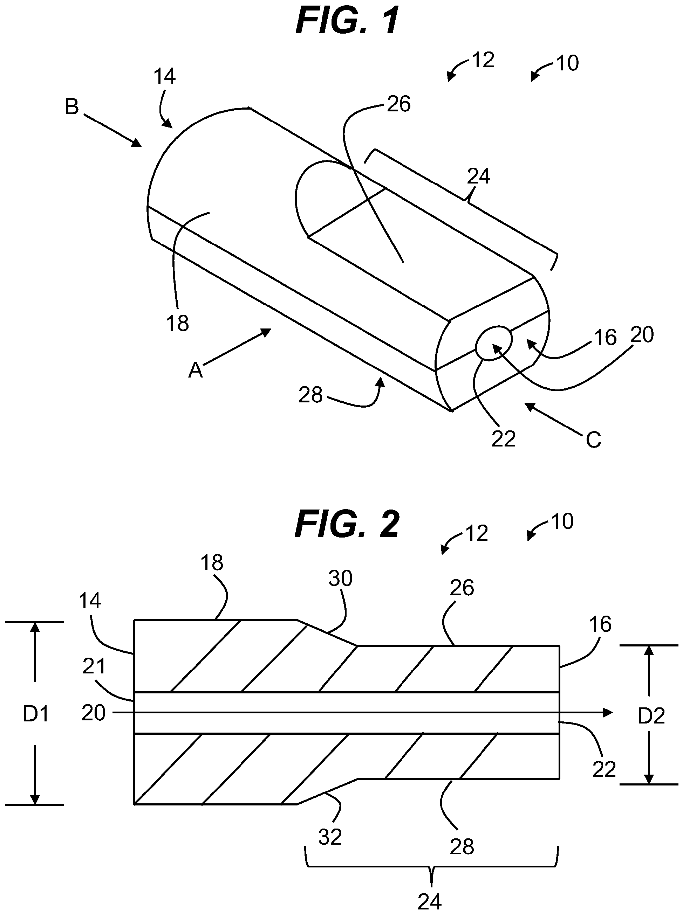

In general, and according to exemplary embodiments hereof, as shown in **FIGS. 1-15****,** an edible mouthpiece system **10** for use with a smokable item *(e.g.,* a cigar, a cigarette, a pre-roll cone, an empty cone, a pre-rolled or hand-rolled cigarette, etc.) is provided. The edible mouthpiece system **10** may be entirely comprised of an edible material, such as candy *(e.g.,* hard candy, chewing gum, etc.), other types of edible materials, and any combinations thereof. In this way, all, or portions of the edible mouthpiece 10 may be broken off and enjoyed as one would enjoy a piece of candy *(e.g.,* by sucking on it, chewing it, swallowing it, ingesting it, etc.).

During use, the edible mouthpiece system **10** includes and/or may be otherwise coupled with the mouth end of a smokable item, comes into physical contact with the user's mouth, and provides flavoring thereto to enhance the smoking experience. Smoke from the smokable item also may be enhanced with flavor while passing through an inner passageway within the mouthpiece system **10** to the user's mouth.

In addition, the user of the edible mouthpiece **10** may bite or otherwise beak off a section of the edible mouthpiece **10** to suck on, chew, and/or ingest during the smoking experience. Accordingly, it is preferable that the edible mouthpiece **10** not include any other non-edible materials (at least in the area of the edible mouthpiece **10** that contacts the user's mouth during use). For example, it is preferable that the edible mouthpiece **10** not include any non-edible internal support structures (*e.g.*, glass or plastic tubes that extend through the mouthpiece **10** to form or support the mouthpiece's inner passageway, or any other types of non-edible structures) nor any external support structures (other than wrapping material(s) to couple the mouthpiece body **12** to the smokable item as described herein).

In some embodiments, the edible mouthpiece system **10** is provided as a standalone item for use in pre-rolling and/or hand rolling a cigar, cone, cigarette, etc. In other embodiments, the edible mouthpiece system **10** includes *(e.g.,* is coupled to) an empty cone and is provided to the consumer. The consumer then may fill the empty cone with smokable materials to form a smokable cone wherein the edible mouthpiece system **10** is used as the cone's mouthpiece. In other embodiments, the edible mouthpiece system **10** includes *(e.g.,* is coupled to) a pre-roll that is filled with a smokable material such that the edible mouthpiece system **10** including the pre-roll is ready to smoke. It is understood that the edible mouthpiece system **10** may be used with any suitable smokable item in any suitable configuration and that the examples provided herein are not meant to be limiting.

In one exemplary embodiment hereof as shown in **FIG. 1****,** the edible mouthpiece system **10** includes a mouthpiece body **12** including a first end **14** (*e.g.*, a proximal end to be joined with a smokable item such as a cigar, cigarette, or cone), a second end **16** *(e.g.,* a distal end to be placed against a user's mouth for smoking), and sidewalls **18** extending between the first end **14** and the second end **16.** The system **10** also includes an inner passageway **20** passing through the body **12** from the first end **14** to the second end **16.** The opening **22** in the second end **16** communicates with the inner passageway **20** and the opening **21** in the first end **14** and serves as an opening through which the user may inhale smoke while using the mouthpiece **10.**

In some embodiments, the system **10** also includes a mouth portion **24** including an upper mouth surface **26** and a lower mouth surface **28** that may provide areas onto which the user may place his/her teeth and/or lips to generally hold the system **10** within his/her mouth during use. The edible mouthpiece system **10** also may include other elements as necessary for the system **10** to perform its functionalities.

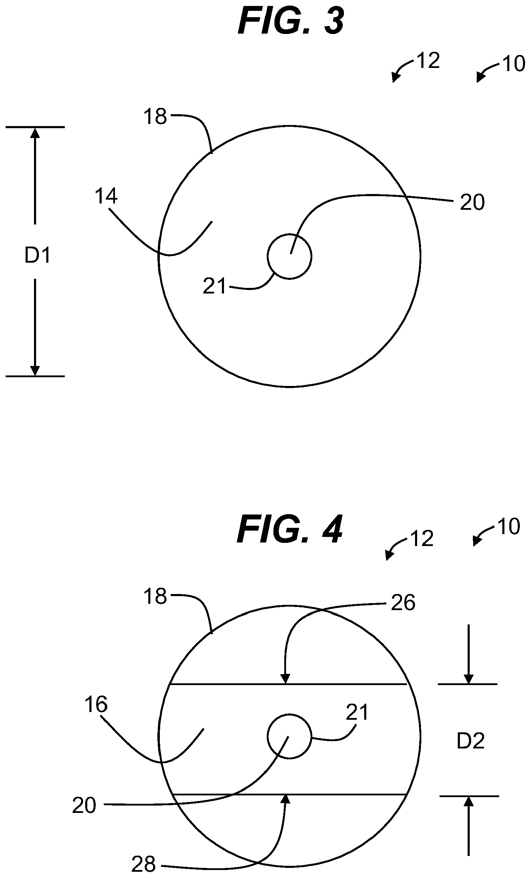

The edible mouthpiece system **10** will next be described in further detail with respect to **FIGS. 1-15****.** **FIGS. 2** and **5****-6** show side sectional views of various embodiments of the system **10** taken from the perspective of the arrow **A** in **FIG. 1****.** **FIG. 3** shows the embodiment of **FIG. 1** taken from the perspective of the arrow **B** in **FIG. 1****,** and **FIG. 4** shows the embodiment taken from the perspective of the arrow **C.**

In some embodiments, as shown in **FIG. 3****,** the mouthpiece body **12** includes a generally circular cross-sectional shape. However, it is understood that the body **12** may include other cross-sectional shapes such as, without limitation, oval, square, trapezoidal, polygonal, other suitable shapes, and any combinations thereof.

In some embodiments, as shown in **FIGS. 3-4****,** the inner passageway **20** includes a generally circular cross-section (although other shaped cross-sections also may be used, such as, *e.g.,* oval, square, polygonal) and is generally centered in the cross-section of the mouthpiece body **12.** However, it is understood that the inner passageway **20** may be offset from the middle of the cross-section as desired. It also is contemplated that the system **10** may include two or more inner passageways **20.** In this case, the plurality of inner passageways **20** may be generally parallel with one another and/or at offset angles. Because smoke traveling through the inner passageway(s) **20** may be infused with flavoring released from the sidewalls of the inner passageway(s) **20,** additional inner passageways **20** may increase the surface areas in contact with the smoke and therefore provide a higher amount of flavoring to be released into the smoke. The diameter of the inner passageway(s) **20** may be chosen to provide a desirable draw of the smoke from the first end **14** to the second end **16** of the mouthpiece system **10** and a desirable amount of flavoring during use of the system **10** with a smokable item *(e.g.,* with a cigar, cigarette, or cone).

In some embodiments, as shown in **FIGS. 1, 2** and **4****,** the mouthpiece body **12** includes a mouth portion **24** towards its second (distal) end **16.** In some embodiments, the mouth portion **24** includes an area of the body **12** with a reduced size cross-section. For example, an upper portion of the body **12** may be removed to form the upper mouth surface **26,** and/or a lower portion of the body **12** may be removed to form a lower mouth surface **28.** In some embodiments, as shown in **FIG. 2****,** this may reduce the height of the body **12** from **D1** (towards the first (proximal) end **14)** to **D2** (towards the second (distal) end **16).**

In some embodiments, as shown in **FIG. 4****,** the width **D1** of the body **12** may remain constant from the first end **14** to the second end **16.** However, it also is contemplated that the width **D1** of the body **12** towards the second end **16** also may be reduced by removing a side portion of the body **12** *(e.g.,* an upper and/or lower portion) in these areas.

In some embodiments, as shown in **FIG. 4****,** the upper mouth surface **26** and the lower mouth surface **28** may be generally parallel with one another, but this may not be necessary. The height **D2** of the mouth portion **24** may be chosen such that the mouth portion **24** fits comfortably between the user's lips and/or teeth during use. In some embodiments, as shown in **FIG. 2****,** the mouth portion **24** may include an upper transitional surface **30** that generally transitions from the upper mouth surface **26** to the sidewalls **18** towards the first end **14** of the body **12,** and a lower transitional surface **32** that generally transitions from the lower mouth surface **28** to the sidewalls **18** towards the first end **14.** While the transitional surfaces **30, 32** are depicted as generally linear, it is understood that the surfaces **30, 32** may include concave and/or convex curvatures.

In some embodiments, the first end **14** of the mouthpiece body **12** is adapted to be abutted against and coupled to an unlit mouth end of a smokable item **SI** such as a cigar, cigarette, or cone. In some embodiments, an outer layer of circumferential wrapping material such as leaf, paper, or other suitable material may be wrapped circumferentially around the outer interface between the mouthpiece body **12** and the mouth end of the smokable item **SI** to form a seal between the two **12, SI.** In this embodiment, it may be preferable that the diameter **D1** of the mouthpiece body **12** be chosen to generally match the diameter of the mouth end of the smokable item **SI** so that the outer sidewalls **18** of the mouthpiece body **12** and the outer sidewalls of the smokable item **SI** are generally flush. In some embodiments, the material that forms the smokable item *(e.g.,* the paper that forms the cone) may simply overlay the sidewalls **18** at the first end **14** of the mouthpiece body **12** and be used thereby to secure the mouthpiece body **12** to the smokable item **SI.** In some embodiments, the wrapping material, the material that forms the smokable item **SI,** and/or any other material(s) used to secure the mouthpiece body **12** to the smokable item **SI** may be secured to the mouthpiece body **12** using adhesive, sonic welding, and/or other suitable attachment techniques.

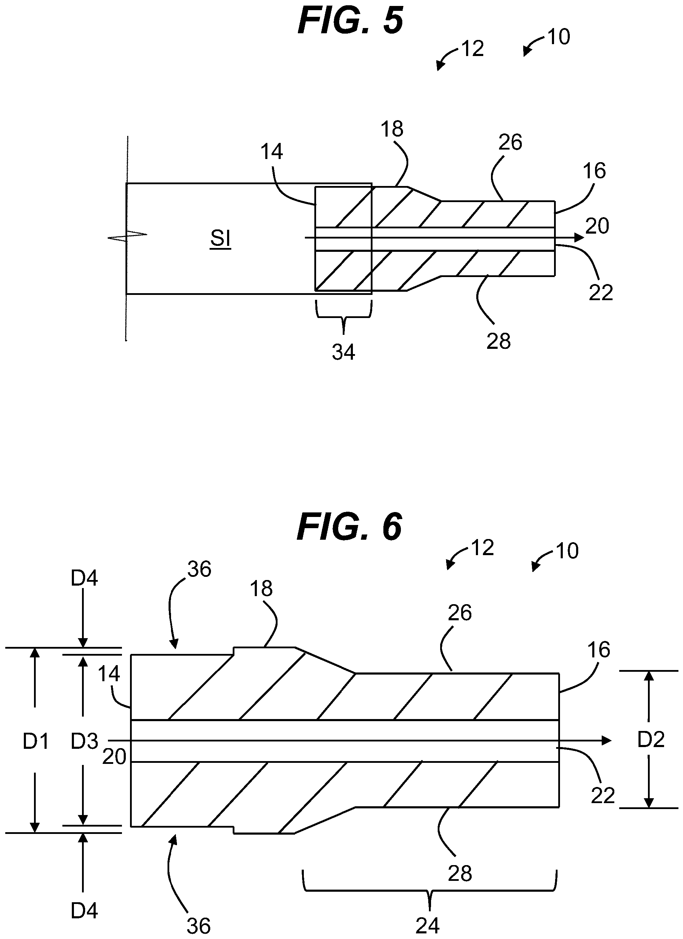

In some embodiments, as shown in **FIG. 5****,** the unlit mouth end of the smokable item **SI** may be hollowed out forming a hollow portion **34** (encircled by the smokable item's outer circumferential material) into which the first end **14** of the system **10** may be placed and attached. In some embodiments, a portion of the mouthpiece body **12** towards the first end **14** is received into the hollow portion **32** and adhered therein using pressure fit, glue, or other attachment techniques between the first end **14** and the inner surfaces of the hollow portion **34.** In some embodiments, an outer layer of wrapping leaf, paper, or other suitable material may be wrapped circumferentially around the outer interface between the mouthpiece body **12** and the hollow portion **34** of the smokable item **SI** to form a seal between the two **12, 34.**

In some embodiments, the unlit mouth end of the smokable item SI may be provided with a hollow end *(e.g.,* in the case of including an empty cone with the mouthpiece body **12)** that may be coupled directly to the second end **14** of the mouthpiece body **12.** In other embodiments, the smokable item **SI** may be formed directly onto the mouthpiece **12** by overlaying the outer cone *(e.g.,* the cone paper) about the first end **14** of the mouthpiece body **12** and securing it thereto *(e.g.,* using pressure fit, adhesive, sonic welding, etc.).

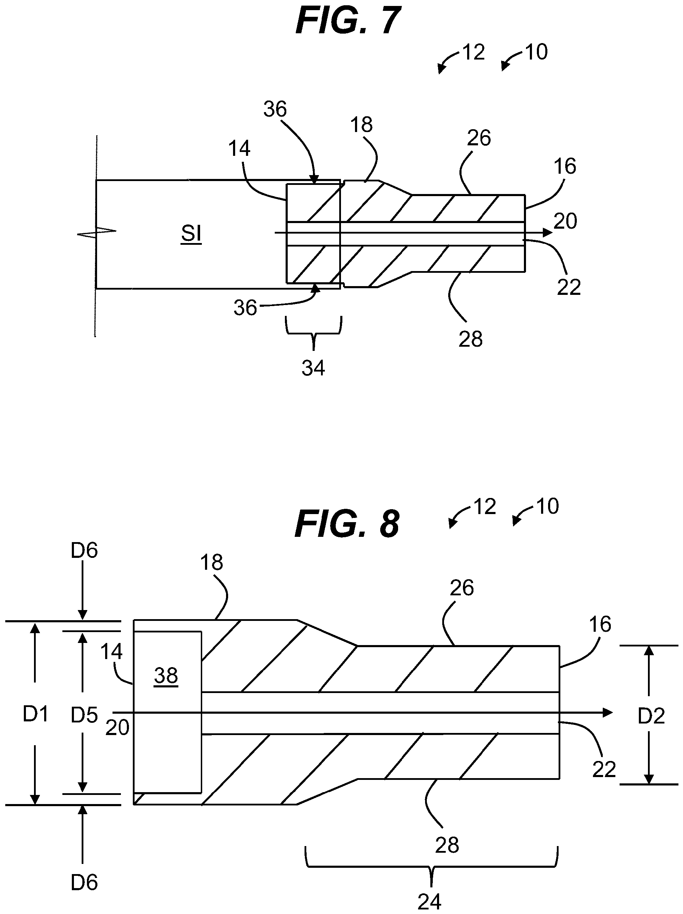

In some embodiments, as shown in **FIG. 6****,** the sidewalls **18** about a portion of the mouthpiece body **12** towards the first end **14** include an outer circumferential notch **36** (with depth **D4)** adapted to receive the outer circumferential wrapping of the smokable item's hollow portion **34.** In this way, as shown in **FIG. 7****,** with the first end **14** portion of the mouthpiece body **12** with diameter **D3** received into the hollow portion **34,** the outer circumferential wrapping about the hollow portion **34** received within the notch **36** may be generally flush with the mouthpiece body's sidewalls **18.** The first end **14** portion may then be adhered within the hollow portion **34** using pressure fit, glue, or other attachment techniques. In some embodiments, an outer layer of circumferential wrapping material such as leaf, paper, or other suitable material may be wrapped circumferentially around the outer interface between the mouthpiece body 12 and the hollow portion 34 of the smokable item SI and secured thereto *(e.g.,* using adhesive, sonic welding, etc.) to form a seal between the two 12, 34.

In some embodiments, as shown in FIG. 8, the first end 14 of the mouthpiece body 12 includes an end cavity 38 adapted to receive the mouth end of a smokable item SI *(e.g.,* cigar, cigarette, or cone). In this embodiment, it may be preferable that the smokable item SI does not include a hollow portion 34. The cross-sectional shape of the end cavity **38** may be chosen to match the cross-sectional shape of the smokable item **SI** *(e.g.,* circular) but other cross-sectional shapes also may be used.

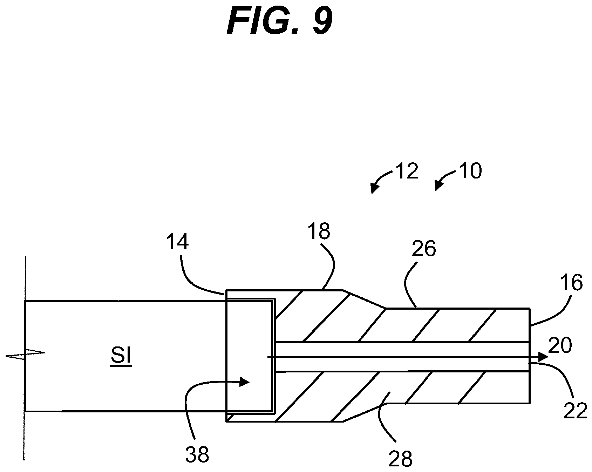

In some embodiments, the end cavity **38** includes a diameter **D5** chosen to generally match the diameter of the mouth end of the smokable item **SI** so that the mouth end of the smokable item **SI** may be inserted into the end cavity **38** and be held securely therein. This is shown in **FIG. 9****.**

In some embodiments, as shown in **FIG. 8****,** the sidewalls **18** immediately adjacent and generally defining the end cavity **38** have a thickness of **D6** *(e.g.,* about 0.0625"-0.25") and a length sufficient to extend over a portion of the mouth end of the smokable item **SI** such that the mouth end may be held snugly therein *(e.g.,* about 0.25"-1.0" and preferably about 0.5"). The mouth end may be secured within the end cavity **8** using pressure fit, adhesive, sonic welding, other securing techniques, and any combinations thereof. In some embodiments, an outer layer of wrapping leaf, paper, or other suitable material may be wrapped circumferentially around the outer interface between the mouthpiece body **12** and the smokable item **SI** and secure thereto *(e.g.,* using adhesive, sonic welding, etc.) to form a seal between the two **12, SI.**

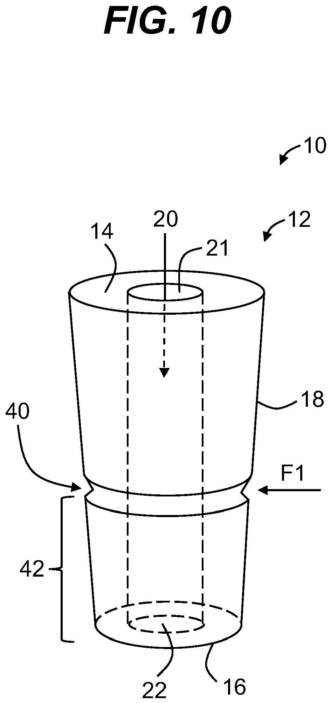

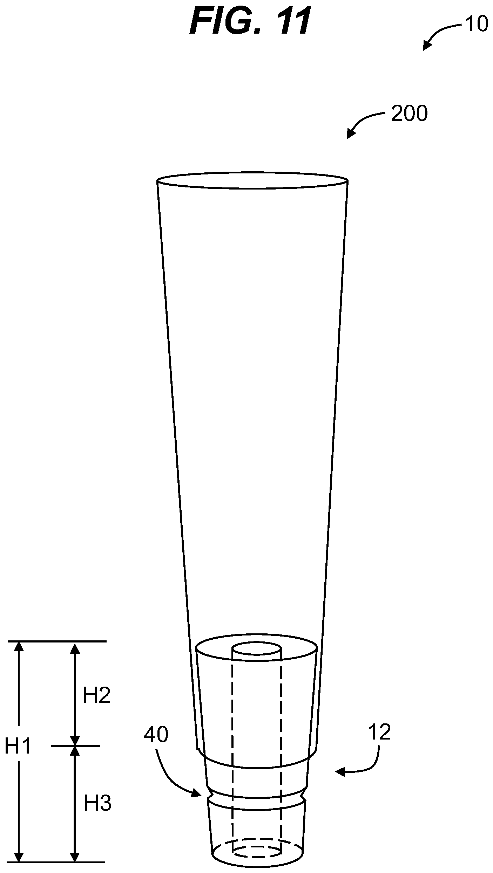

**FIGS. 10** and **11** show an edible mouthpiece **10** including a mouthpiece body **12** designed to be used as a mouthpiece to a cone **200** *(e.g.,* an empty cone or a pre-roll cone, etc.). **FIG. 10** shows the mouthpiece body **12** alone and **FIG. 11** shows the cone **200** coupled with the mouthpiece body **12** and as part of the mouthpiece system **10.** As shown, the edible mouthpiece **10** is generally conical frustum-shaped to match a conical frustum-shaped cone **200** that it may be coupled with. However, it is understood that the mouthpiece **10** may be formed in other shapes such as cylindrical to match a cylindrical smokable item, etc.

As shown in **FIG. 10****,** the mouthpiece **10** includes a mouthpiece body **12** including a first end **14** *(e.g.,* a proximal end to be joined with the cone), a second end **16** *(e.g.,* a distal end to be placed against a user's mouth for smoking), and sidewalls **18** extending between the first end **14** and the second end **16.** The mouthpiece **10** also includes an inner passageway **20** passing through the body **12** from the first end **14** to the second end **16.** The passageway opening **22** in the second end **16** communicates with the inner passageway **20** and the passageway opening **23** in the first end **14** and serves as an opening through which the user may inhale smoke while using the mouthpiece **10.**

As with other embodiments described herein, the mouthpiece **10** is comprised entirely of an edible substance such as hard candy.

As shown in **FIG. 11****,** the mouthpiece body **12** includes a total height **H1** with a first portion of height **H2** that is overlaid by the cone **200** such that it may be coupled thereto in this area, and an exposed portion of height **H3** that may be held within the user's mouth and enjoyed for its flavoring.

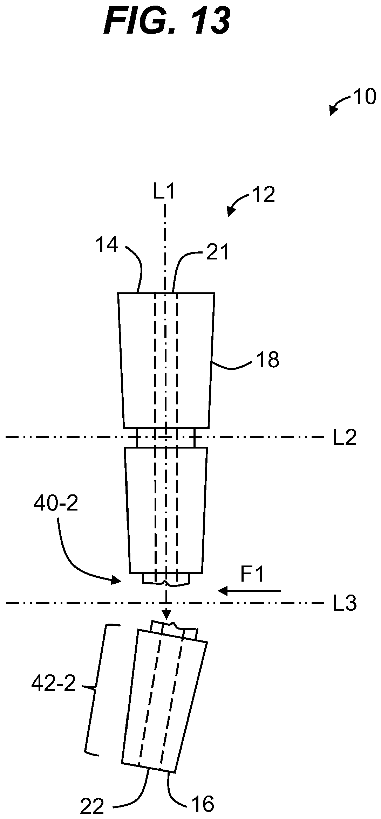

In some embodiments, the mouthpiece body **12** includes a weakened area **40.** In some embodiments, the weakened area **40** is designed to provide an area on the mouthpiece body **12** that may be intentionally broken. In some embodiments, the weakened area **40** is designed to enable a portion of the mouthpiece body **12** to be broken off and consumed, *e.g.,* as one would consume candy. For instance, a user may bite or otherwise apply a force to the mouthpiece body **12** at the weakened area **40** to break the mouthpiece body **12** into at least two separate and distinct pieces. For example, as shown in **FIG. 10** (also see **FIG. 13****),** a force **F1** applied to the weakened area **40** may cause the portion **42** to be broken off from the mouthpiece body **12.** Once broken off, the user may suck on, chew, swallow, and/or ingest the broken off piece **42.**

In some embodiments, as shown in **FIG. 11****,** the weakened area **40** is formed in the exposed portion of the mouthpiece body **12** with height **H3.** In this way, the portion **42** maybe broken off with the remaining portion of the mouthpiece body **12** remaining coupled to the cone **200** for use as a fully functional mouthpiece to the cone **200.** As such, the user may enjoy the broken off piece **42** *(e.g.,* as candy) while continuing to smoke the cone **200** and enjoying the remaining portion of the mouthpiece body **12** *(e.g.,* for its flavor, its ability to add flavor to the smoke, etc.) during the smoking experience. In addition, in this arrangement, the breaking off of the portion **42** may not interfere with the coupling of the remaining portion of the mouthpiece body **12** to the cone **200.**

In some embodiments, the weakened area **40** includes an area of reduced thickness of the body's sidewalls **18.** This reduced sidewall thickness may be achieved by including one or more indents, recesses, notches, grooves, channels, holes, and/or other type(s) of weakened areas into the sidewalls **18** of the mouthpiece body **12.** In some embodiments, the weakened area **40** *(e.g.,* a notch) may include a height of about 0.5mm - 2.0mm and preferably about 1 mm, and a depth of about 0.5mm - 2.0mm and preferably about 1 mm. As shown in **FIG. 10****,** the notch may be formed as a sideways V shaped notch (with the sides of the notch converging at an apex towards the interior of the body **12.** The notch also may be formed with a generally rectangular cross-section *(e.g.,* see **FIG. 11****).** It is understood that the weakened area **40** *(e.g.,* a notch) may be formed using any form suitable for providing a weakened area **40.**

In some embodiments, as shown in **FIG. 10****,** the weakened area **40** includes a circumferential notch that extends about the entire outer circumference of the mouthpiece body **12.** The user may place the circumferential weakened area **40** between his/her upper and lower teeth (at any location of the weakened area **40** about the circumference) and bite down to break the mouthpiece body **12.** This may cause the section **42** to break loose from the body **12** and the user may then enjoy the broken off piece **42** as he/she would enjoy a piece of candy. The user also may grasp the mouthpiece body **12** using his/her hands and snap the body **12** into separate pieces at the weakened area **40.**

In other embodiments, the weakened area **40** extends about one or more portions of the outer circumference of the mouthpiece body **12.** For example, in some embodiments, the weakened area **40** may extend across a first portion of the mouthpiece body's circumference, and across a second portion of the mouthpiece body's circumference, *e.g.,* on an opposite side from the first portion. With this arrangement, a user's top teeth may engage the first weakened portion and the user's bottom teeth may engage the second weakened portion. When the user may bite downward on the first and second weakened portions **40,** the mouthpiece body **12** may break.

In other embodiments, the weakened area **40** extends about the circumference of the inner passageway **20** (completely and/or partially) so that the weakened area **40** is on an interior of the mouthpiece body **12.** This may be instead of and/or in addition to the exterior weakened area **40.** In some embodiments, an interior weakened area may preferably be aligned with or otherwise correspond to an outer weakened area **40** *(e.g.,* the internal weakened area **40** and the external weakened area **40** may be on opposite sides of the body's sidewalls **18).**

In some embodiments, the weakened area **40** includes an area of the body's sidewalls **18** where the edible material comprising the mouthpiece body **12** has been removed *(e.g.,* by grinding, etc.). In other embodiments, the weakened area **40** includes an area of the body's sidewalls **18** that were never provided, *e.g.,* in the case where the mouthpiece body **12** is molded and the areas of reduced thickness sidewalls **18** are caused by structures within the mold). In any event, the weakened area **40** provides an area of the mouthpiece body **12** that is thinner than other areas of the mouthpiece body **12** and therefore structurally weaker than other areas on the mouthpiece body **12.** In this way, the mouthpiece body **12** is designed to be intentionally broken at the weakened area(s) **40.**

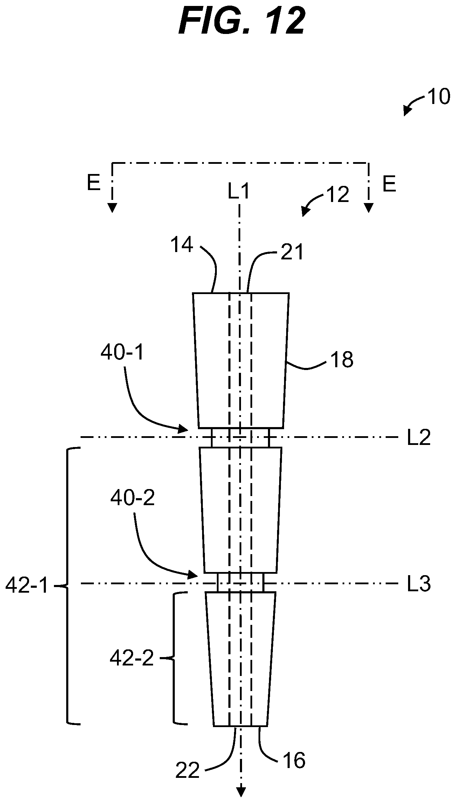

In some embodiments, as shown in **FIG. 12****,** the mouthpiece body **12** may include two or more weakened areas **40** so that the user may choose how much of the mouthpiece body **12** he/she would like to break off at a time. For example, **FIG. 12** shows a mouthpiece body with two separate weakened areas **40-1, 40-2,** with the first weakened area **40-1** enabling a first section **42-1** to be broken off the body **12,** and the second weakened area **40-2** enabling a second section **42-2** to be broken off the body **12.** Because the second weakened area **40-2** is positioned closer to the second end **16** of the mouthpiece body **12** compared to where the first weakened area **40-1** may be positioned, breaking the mouthpiece body **12** at the second weakened area **40-2** causes a smaller section **42-2** to be broken off of the body **12** compared to if the body **12** were to be broken at the first weakened area **40-1.** In addition, breaking the mouthpiece body **12** at the second weakened area **40-2** leaves the first weakened area **40-1** still intact on the mouthpiece body **12.** This is shown in **FIG. 13****.** In this way, a user may break off the second section **42-2** first to enjoy the second section **42-2** as one would enjoy a piece of candy *(e.g.,* as a breath mint) while continuing to smoke the smokable item coupled to the mouthpiece body **12.** Then, the user may later break off the first section **42-1** (which may be reduced in size due to the removal of the second section **42-2)** to enjoy yet another section of the mouthpiece body **12** as one would enjoy another piece of candy *(e.g.,* another breath mint).

In some embodiments, as shown in **FIG. 12****,** the mouthpiece body **12** includes a longitudinal axis **L1** defined by its first end **14** and its second end **16,** and the weakened areas **40-1, 40-2** (e.g., the outer circumferential notches) are oriented along planes that are each substantially orthogonal to the longitudinal axis **L1,** with substantially orthogonal meaning within +/- 20° of orthogonal. This is depicted in **FIG. 12** by the lines **L2** and **L3,** respectively.

It also is understood that the weakened areas **40-1, 40-2** may be oriented along planes that are not necessarily orthogonal to the longitudinal axis **L1,** but that are oriented at offset angles with respect to the longitudinal axis **L1.** In this way, the weakened areas **40-1, 40-2** may not be aligned along planes that are parallel to the longitudinal axis **L1.** Accordingly, when either of the weakened areas **40-1, 40-2** is caused to break, the mouthpiece body **12** may break along a plane that cuts across its longitudinal axis **L1** (e.g., along a plane that cuts orthogonally across its longitudinal axis **L1** and/or along a plane that cuts across its longitudinal axis **L1** at an offset angle with respect to its longitudinal axis **L1).**

While **FIG. 12** shows two separate weakened areas **40** it is understood that the body **12** may include any number of weakened areas **40** resulting in any number of sections **42** that may be broken off from the body **12.**

In some embodiments, the mouthpiece body **12** may be formed as two or more separate segments along its longitudinal axis such that the separate segments may be coupled together end-to-end after initially being formed individually. The separate segments by be attached to one another using adhesive, the bonding properties of the edible material, sonic welding, and/or other attachment techniques. In this way, the junctions between the bonded segments may be generally weaker than the mouthpiece body **12** in other areas thereby forming weakened areas **40** that may be broken when desired.

In some embodiments, the mouthpiece body **12** is formed with a diameter and using a material with a hardness that may facilitate the body being broken at any area on the body **12,** even without weakened areas **40.** In this case, the user may simply bite the end of mouthpiece body **12** at any location along the body **12** to cause a section of the body **12** to break free. The user may then enjoy the broken off piece as he/she would enjoy a piece of candy while continuing to use the remaining portion of the mouthpiece to smoke the smokable item. However, it may be preferable to include one or more weakened areas **40** such that the mouthpiece body **12** may be designed to break at particular and predetermined areas. This may help to avoid the mouthpiece body **12** from shattering or otherwise breaking in unintended areas.

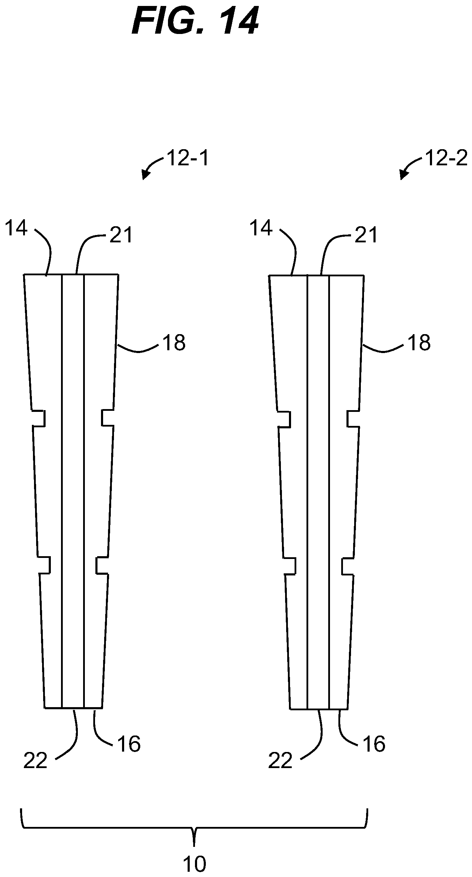

In some embodiments, the mouthpiece body **12** may be molded, extruded, carved, or otherwise formed. In some embodiments, the mouthpiece body **12** may be formed *(e.g.,* molded) as a single part while in other embodiments the mouthpiece body **12** may be formed *(e.g.,* molded) as two or more parts that may be combined to form the mouthpiece body **12.** For example, **FIG. 14** shows the mouthpiece body **12** separated along the cutlines **E-E** of **FIG. 12** to form two separate parts **12-1, 12-2.** The two separate parts **12-1, 12-2** may be manufactured separately *(e.g.,* molded) and then combined to form the mouthpiece body **12.** Notably, the inner passageway **20** of the mouthpiece body **12** also may be divided into two sections as shown, with the first section formed in the first body part **12-1** and the second section formed into the second body part **12-2.** This may allow use of a simpler mold to form the parts **12-1, 12-2** that does not require inserts and other structures within the mold to form a fully formed passageway **20.** The parts may be attached together using edible adhesive, may be welded together, may be wetted and pressed together to utilize the inherent bonding properties of the edible materials, may be held together by circumferential wrapping material *(e.g.,* wrapping paper may couple the mouthpiece **10** to the cone), and/or using other attachment techniques.

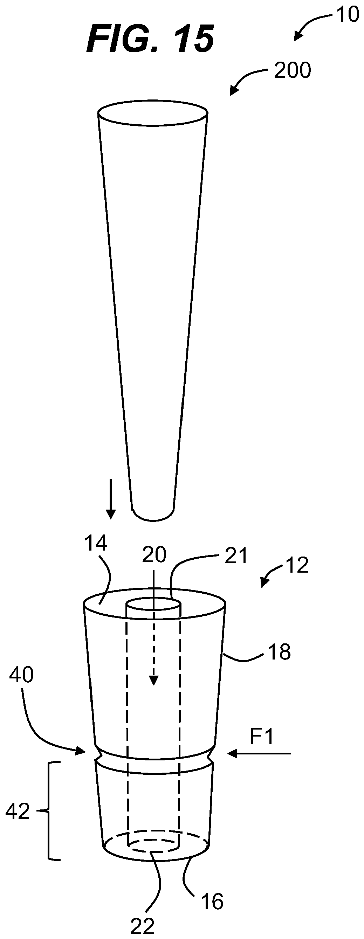

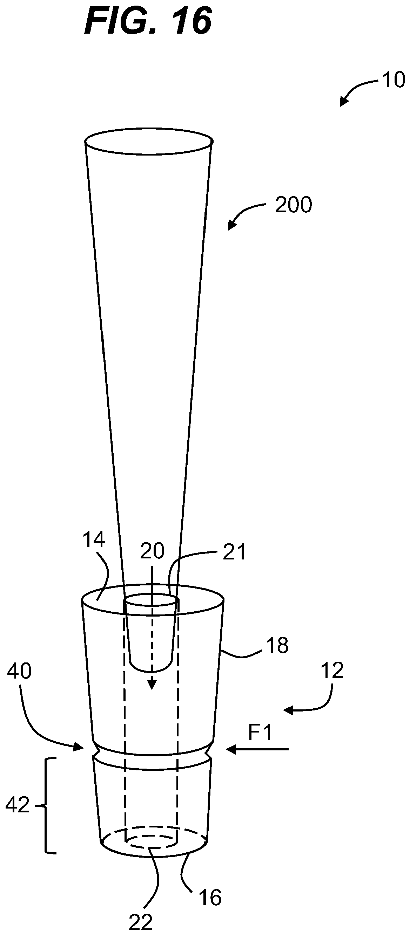

In some embodiments, as shown in **FIGS. 15** and **16****,** the first opening **21** and the passageway **20** are designed and sized to receive a mouth end of a cigarette, a cone *(e.g.,* a pre-roll cone or an empty cone), a cigar, and/or any other appropriate smokable item. In this way, the mouth end of the smokable item may be inserted into the first opening **21** and held within the passageway **20** as shown in **FIG. 15****.** The user may then use the mouthpiece **12** as a mouthpiece to the smokable item. The smokable item *(e.g.,* the cone) may be held within the first opening **21** and the passageway **20** in the area of the first opening **21** by pressure fit, friction, adhesive, and/or using other attachment techniques.

In some embodiments, the mouthpiece body **12** may include one or more weakened areas **40** as describe with regard to other embodiments herein.

In any of the embodiments described herein or otherwise, the mouthpiece body **12** comprises an edible material. For example, the body **12** may comprise any type of hard sugar candy, compressed sugar candy, caramel, butterscotch, chewing gum, bubble gum, sucker, jaw breaker, chocolate, taffy, toffee, marzipan, praline, marshmallow, candy cane, mint, gumdrop, gummy, other types of edible materials, and any combinations thereof. It is understood that the edible material may include any type of flavoring as desired, such as, without limitation, fruit flavored *(e.g.,* cherry, grape, lemon-lime, raspberry, mango, coconut, banana, orange, apple, lemonade, limeade, etc.), mint, chocolate, vanilla, caramel, sour, other flavors, and any combinations thereof.

In any of the embodiments described herein, the edible material is chosen to have a melting point that enables the mouthpiece body **12** to generally hold its form without completely melting during use. It is understood that the edible material may be affected by the temperature of the smoke from the burning smokable item **SI,** and that the temperature may cause the edible material to slightly melt or otherwise warp during use. However, it is preferable that the edible material be designed to generally withstand bursts of high temperature smoke from the smokable item **SI** being inhaled by the user and to not completely lose its shape and form during the duration of the smoking experience *(e.g.,* 5-15 minutes). For example, it may be preferable that the edible material be able to withstand 3-5 second bursts of 400°C - 900°C smoke without significantly deforming *(e.g.,* without the inner passageway **20** closing and/or becoming obstructed).

In some implementations, *e.g.,* the mouthpiece system **10** may be provided to manufacturers of cigars, cigarettes, pre-roll cones, and/or empty cones, etc. to be coupled to these types of products and then sold to consumers. In another example, the mouthpiece system **10** may be coupled with a cigar, pre-roll cone and/or cigarette, and/or to an empty cone during its manufacturing process and made available for sale to consumers as the combination. In another example, the mouthpiece system **10** may be sold directly to consumers such that the consumers themselves may couple the mouthpiece system **10** with wrapper leaf, rolling paper, or other materials to form a cigar, cigarette, a cone, an empty cone, or other type of smokable item. It is understood that the examples described above are meant for demonstration and are non-limiting.

It is understood that any details and/or aspects of any embodiments of the system **10** described herein may be combined with any details and/or aspects of any other embodiments of the system **10** in any way to form additional embodiment(s) of the system **10** all of which are within the scope of the edible mouthpiece system **10.**

Where a process is described herein, those of ordinary skill in the art will appreciate that the process may operate without any user intervention. In another embodiment, the process includes some human intervention *(e.g.,* a step is performed by or with the assistance of a human).

As used herein, including in the claims, the phrase "at least some" means "one or more," and includes the case of only one. Thus, *e.g.,* the phrase "at least some ABCs" means "one or more ABCs", and includes the case of only one ABC.

As used herein, including in the claims, term "at least one" should be understood as meaning "one or more", and therefore includes both embodiments that include one or multiple components. Furthermore, dependent claims that refer to independent claims that describe features with "at least one" have the same meaning, both when the feature is referred to as "the" and "the at least one".

As used in this description, the term "portion" means some or all. So, for example, "A portion of X" may include some of "X" or all of "X". In the context of a conversation, the term "portion" means some or all of the conversation.

As used herein, including in the claims, the phrase "using" means "using at least," and is not exclusive. Thus, *e.g.,* the phrase "using X" means "using at least X." Unless specifically stated by use of the word "only", the phrase "using X" does not mean "using only X."

As used herein, including in the claims, the phrase "based on" means "based in part on" or "based, at least in part, on," and is not exclusive. Thus, *e.g.,* the phrase "based on factor X" means "based in part on factor X" or "based, at least in part, on factor X." Unless specifically stated by use of the word "only", the phrase "based on X" does not mean "based only on X."

In general, as used herein, including in the claims, unless the word "only" is specifically used in a phrase, it should not be read into that phrase.

As used herein, including in the claims, the phrase "distinct" means "at least partially distinct." Unless specifically stated, distinct does not mean fully distinct. Thus, *e.g.,* the phrase, "X is distinct from Y" means that "X is at least partially distinct from Y," and does not mean that "X is fully distinct from Y." Thus, as used herein, including in the claims, the phrase "X is distinct from Y" means that X differs from Y in at least some way.

It should be appreciated that the words "first," "second," and so on, in the description and claims, are used to distinguish or identify, and not to show a serial or numerical limitation. Similarly, letter labels *(e.g.,* "(A)", "(B)", "(C)", and so on, or "(a)", "(b)", and so on) and/or numbers *(e.g.,* "(i)", "(ii)", and so on) are used to assist in readability and to help distinguish and / or identify, and are not intended to be otherwise limiting or to impose or imply any serial or numerical limitations or orderings. Similarly, words such as "particular," "specific," "certain," and "given," in the description and claims, if used, are to distinguish or identify, and are not intended to be otherwise limiting.

As used herein, including in the claims, the terms "multiple" and "plurality" mean "two or more," and include the case of "two." Thus, *e.g.,* the phrase "multiple ABCs," means "two or more ABCs," and includes "two ABCs." Similarly, *e.g.,* the phrase "multiple PQRs," means "two or more PQRs," and includes "two PQRs."

The present invention also covers the exact terms, features, values and ranges, etc. in case these terms, features, values and ranges etc. are used in conjunction with terms such as about, around, generally, substantially, essentially, at least etc. (i.e., "about 3" or "approximately 3" shall also cover exactly 3 or "substantially constant" shall also cover exactly constant).

As used herein, including in the claims, singular forms of terms are to be construed as also including the plural form and vice versa, unless the context indicates otherwise. Thus, it should be noted that as used herein, the singular forms "a," "an," and "the" include plural references unless the context clearly dictates otherwise.

Throughout the description and claims, the terms "comprise", "including", "having", and "contain" and their variations should be understood as meaning "including but not limited to", and are not intended to exclude other components unless specifically so stated.

It will be appreciated that variations to the embodiments of the invention can be made while still falling within the scope of the invention. Alternative features serving the same, equivalent or similar purpose can replace features disclosed in the specification, unless stated otherwise. Thus, unless stated otherwise, each feature disclosed represents one example of a generic series of equivalent or similar features.

The present invention also covers the exact terms, features, values and ranges, etc. in case these terms, features, values and ranges etc. are used in conjunction with terms such as about, around, generally, substantially, essentially, at least etc. (i.e., "about 3" shall also cover exactly 3 or "substantially constant" shall also cover exactly constant).

Use of exemplary language, such as "for instance", "such as", "for example" ("e.g.,") and the like, is merely intended to better illustrate the invention and does not indicate a limitation on the scope of the invention unless specifically so claimed.

While the invention has been described in connection with what is presently considered to be the most practical and preferred embodiments, it is to be understood that the invention is not to be limited to the disclosed embodiment, but on the contrary, is intended to cover various modifications and equivalent arrangements included within the spirit and scope of the appended claims.

## Claims

1. A smokable assembly comprising:
a mouthpiece comprised entirely of edible materials including a flavoring, the mouthpiece including a mouthpiece first end, a mouthpiece second end, a mouthpiece body extending between the mouthpiece first end and the mouthpiece second end, and an inner passageway defined by passageway sidewalls comprised of the edible materials including the flavoring and extending through the mouthpiece body from the mouthpiece first end to the mouthpiece second end; and
a combustible member including a member first end, a member second end, and a member body extending between the member first end and the member second end;
wherein the mouthpiece second end is physically coupled directly to the member first end, and wherein in use, the combustible item is combusted to create smoke, wherein the smoke, upon a user inhaling from the mouthpiece first end, passes through the inner passageway, contacts the edible materials including the flavoring that comprise the passageway sidewalls, and becomes flavored smoke due to contact with the flavoring.

2. The smokable assembly of claim 1 wherein the entire mouthpiece is adapted to be ingested by the user.

3. The smokable assembly of claim 1 wherein the mouthpiece is adapted to be broken at a location between the mouthpiece first end and the mouthpiece second end to form at least two separate broken mouthpiece portions.

4. The smokable assembly of claim 3 wherein at least one of the at least two separate broken mouthpiece portions is adapted to be ingested by the user.

5. The smokable assembly of clam 1 wherein the mouthpiece includes at least one weakened area between the mouthpiece first end and the mouthpiece second end and wherein the mouthpiece is adapted to be broken at the at least one weakened area to form at least two separate broken mouthpiece portions.

6. The smokable assembly of claim 5 wherein at least one of the at least two separate broken mouthpiece portions is adapted to be ingested by the user.

7. The smokable assembly of claim 5 wherein the at least one weakened area includes an area of reduced mouthpiece body width and wherein at least one of the at least two separate broken mouthpiece portions is adapted to be ingested by the user.

8. The smokable assembly of claim 7 wherein the area of reduced mouthpiece body width includes a circumferential notch in the mouthpiece body.

9. The smokable assembly of claim 8 wherein the mouthpiece first end and the mouthpiece second end define a mouthpiece longitudinal axis, and the circumferential notch is along a plane that is at an offset angle with respect to the mouthpiece longitudinal axis.

10. The smokable assembly of claim 8 wherein the mouthpiece first end and the mouthpiece second end define a mouthpiece longitudinal axis, and the circumferential notch is along a plane that is substantially orthogonal with respect to the mouthpiece longitudinal axis.

11. The smokable assembly of claim 1 wherein the edible materials include at least one of candy, chewing gum, and gummy.

12. The smokable assembly of claim 1 wherein the combustible member includes at least one of an empty cone, a pre-roll cone, a blunt, a cigarette, and a cigar.

13. The smokable assembly of claim 5 wherein the at least one weakened area includes a total of two circumferential notches in the mouthpiece body.

14. The smokable assembly of claim 1 wherein the mouthpiece body is formed as a conical frustum.

15. The smokable assembly of claim 1 wherein the mouthpiece second end is physically coupled directly to the member first end using outer circumferential wrapping material.
